# EUROPÄISCHE PATENTSCHRIFT

(11) **EP 1 648 648 B1**
(45) Veröffentlichungstag und Bekanntmachung des Hinweises auf die Patenterteilung: **12.09.2007**
(21) Anmeldenummer: 04741138.4
(22) Anmeldetag: 19.07.2004
(51) Int. Cl.: B23K 20/12, B29C 65/06

(54) **MEHRKOPF-REIBSCHWEISSVERFAHREN UND VORRICHTUNG ZUR DURCHFÜHRUNG DES VERFAHRENS**
MULTI-HEAD FRICTION WELDING METHOD AND DEVICE FOR CARRYING OUT SAID METHOD
PROCEDE DE SOUDAGE PAR FRICTION A PLUSIEURS TETES ET DISPOSITIF DESTINE A LA MISE EN OEUVRE DE CE PROCEDE

(30) Priorität: 18.07.2003 DE 10332824
(43) Veröffentlichungstag der Anmeldung: 26.04.2006
(73) Patentinhaber: Multi Orbital Systems GmbH, 95119 Naila (DE)
(72) Erfinder: CRASSER, Leonhard, 95119 Naila (DE)
(74) Vertreter: Fleuchaus, Michael A.
(86) Internationale Anmeldenummer: PCT/EP2004/008050
(87) Internationale Veröffentlichungsnummer: WO 2005/009664

(56) Entgegenhaltungen:
- DE-A- 19 938 100
- GB-A- 1 481 215

## Beschreibung

Die Erfindung betrifft ein Mehrkopf-Reibschweißverfahren zum gleichzeitigen Verschweißen der Fügeflächen von Formteilen, wobei die einzelnen Formteile beiderseits benachbart zu den Fügeflächen in Reibschweißköpfen paßgenau aufeinander ausgerichtet, festgespannt und die Fügeflächen gegeneinander gedrückt werden, sowie jeweils die freien Enden der Formteile beiderseits der Fügeflächen mit Hilfe von in den Reibschweißköpfen sich drehenden Exzenterwellen in Schwingung versetzt werden, und wobei beide Reibschweißköpfe in X-, Z- und Y-, Z-Richtung im wesentlichen gegenphasig schwingen. Die Erfindung betrifft ferner eine Vorrichtung zur Durchführung des Verfahrens.

Reibschweißverfahren als solche sind an sich bekannt, wobei durch relative Bewegung und gleichzeitigem Druck Reibung erzeugt wird, um die nötige Schweißenergie an den zu verschweißenden Flächen zu erzeugen.

Die Eingangs erwähnten Mehrkopf-Reibschweißverfahren, die für linearsymmetrische und rotationssymmetrische Verschweißungen geeignet sind, werden in der DE 1938099 A1 sowie der DE 19938100 A1 beschrieben. Bei diesen Reibschweißverfahren finden zur Erzeugung der Relativbewegung in der Fügeebene der aneinander anstoßenden Profilenden Reibschweißgeneratoren Verwendung, wie sie aus der EP 707919 A1 bekannt sind. Diese Reibschweißgeneratoren sind in Reibschweißköpfe eingebaut, welche jeweils auf jeder Seite der Fügeebene zweier miteinander zu verschweißender Profilstäbe angeordnet sind. Diese Profilstäbe werden mit Klemmbacken derart festgehalten, daß sie mit ihren Fügeflächen paßgenau aneinander anliegen. Die Reibschweißenergie wird über eine mit der Klemmbacke starr verbundenen Schwingplatte in das Profilstabende eingeleitet, wobei zum Verschweißen die der Fügeebenen zugeordneten Klemmbacken gleichzeitig unter Druck gegeneinander verschoben werden.

Der durch die EP 707 919 A1 bekannte Schwinggenerator ist mit einem Steuerexzenter und einer Parallelführung ausgerüstet, welche die eingangsseitig von einem Motor gelieferte Rotationsenergie in eine zirkulare parallel geführte Bewegungsenergie umsetzt. Die zu verschweißenden Profilstabenden werden in exakter Zuordnung zueinander zum Verschweißen aus ihrer Anfangslage durch die von der Schwingplatte auf die Klemmbacken übertragenen gegenphasigen Schwingungsbewegung so lange gegeneinander gerieben bis die Fügeflächen auf die Verschweißungstemperatur aufgeheizt sind. Anschließend werden die Schwinggeneratoren und damit die über die Schwingplatte von dem jeweiligen Schwinggenerator in Schwingung versetzten Klemmbacken mechanisch zwangsgeführt in die Anfangslage zurückgebracht, wobei die Profilstabenden über die Schweißdauer und die Abkühlphase druckbelastet bleiben.

Diese Zurückführung der beiden miteinander zu verschweißenden Profilstabenden in die Anfangslage wird durch die Massenträgheit der Mitnehmerspindel und durch einen Anschlag am Steuerexzenter bewirkt. Daraus ergibt sich als ein Nachteil, daß bei einer großen in der Schweißnaht wirksamen Schubkraft der mit dem Steuerexzenter zusammenwirkende Nocken infolge einer undefinierten Rückstellkraft eine definierte Rückstellung in die Anfangslage (Nullposition) nicht sicherstellt. Bei einer sehr niederen Schubkraft in der Schweißnaht kann der Nocken nach dem Anschlag in eine Undefinierte Lage zurückprellen.

Der Erfindung liegt deshalb die Aufgabe zugrunde ein Mehrkopf-Reibschweißverfahren und eine für die Durchführung geeignete Vorrichtung zu schaffen, womit Nachteile der bekannten Maßnahmen überwunden werden können. Gleichzeitig soll ein wesentlich einfacherer aufgebauter und damit kostengünstiger Schwinggenerator Verwendung finden.

Für das Mehrkopf-Reibschweißverfahren der Eingangs genannten Art wird diese Aufgabe erfindungsgemäß durch die Merkmale des Anspruchs 1 gelöst.

Eine Mehrkopf-Reibschweißvorrichtung zur Durchführung des Verfahrens wird durch die Maßnahmen des Anspruchs 9 charakterisiert.

Weitere Ausgestaltungen der Erfindung sind Gegenstand von Unteransprüchen.

Die sich durch die Maßnahmen der Erfindung ergebenden Vorteile werden im wesentlichen darin gesehen, daß einerseits der Schwingungsgenerator nur mit einem Einfachexzenter und nicht einem komplizierten Doppelexzenter ausgestattet sein muß, wie er bei dem Eingangs erwähnten bekannten Schwingungsgenerator Verwendung findet. Außerdem ist bei der Erfindung keine Rückstellkraft beim Beenden der Schweißphase erforderlich; vielmehr ist eine sichere und definierte Abbremsung in die Position der Anfangslage aufgrund der starken für die Verschweißung, insbesondere bei metallischen Formteilen, benötigten Antriebsmotoren gewährleistet, da die volle Motorleistung für die Abbremsung und zur Überwindung der Schubkräfte in der hart werdenden Schweißnaht zur Verfügung steht. Hierfür genügt eine sehr kurze Zeit von einer bis nur mehreren Zehntel Sekunden. Grundsätzlich ergibt sich als großer Vorteil, daß zu jedem Zeitpunkt während des Schweißens und des Abbremsens die Massenmomente ausgeglichen sind.

Die Vorteile und Merkmale der Erfindung ergeben sich auch aus der nachfolgenden Beschreibung eines Ausführungsbeispieles in Verbindung mit den Ansprüchen und der Zeichnung.

Es zeigen:
- Fig. 1: eine Draufsicht auf die Reibschweißeinheit mit zwei rechtwinklig zu verschweißenden Profilabschnitten;
- Fig. 2: eine Seitenansicht der Reibschweißeinheit in Richtung Nord-Süd der Fig. 1;
- Fig. 3A bis 3D: eine diagrammatische Ansicht des Achsversatzes der Schwingachsen der beiden Schwingungsgeneratoren eines Reibschweißkopfes in der Fügeebene für eine gleichphasige und eine gegenphasige Schwingung mit unterschiedlichem Achsversatz;
- Fig. 4A: Beispiele verschiedener Phasenlagen der in der Fügeebene wirksamen Reibschwingung für einen Achsversatz gemäß Fig. 3A mit einer gleichphasigen Reibschwingung;
- Fig. 4B: ein Diagramm der Schubkomponenten für eine Reibschwingung gemäß Fig. 4A;
- Fig. 5A: Beispiele verschiedener Phasenlagen der in der Fügeebene wirksamen Reibschwingung für einen Achsversatz gemäß Fig. 3A mit einer gleichphasigen Reibschwingung;
- Fig. 5B: ein Diagramm der Schubkomponenten für eine Reibschwingung gemäß Fig. 5A;
- Fig. 6A bis 6D: weitere Ausgestaltungen der Erfindung;
- Fig. 7: eine Draufsicht auf eine Mehrkopf-Reibschweißvorrichtung zum Verschweißen eines rechtwinkligen Profilrahmens.

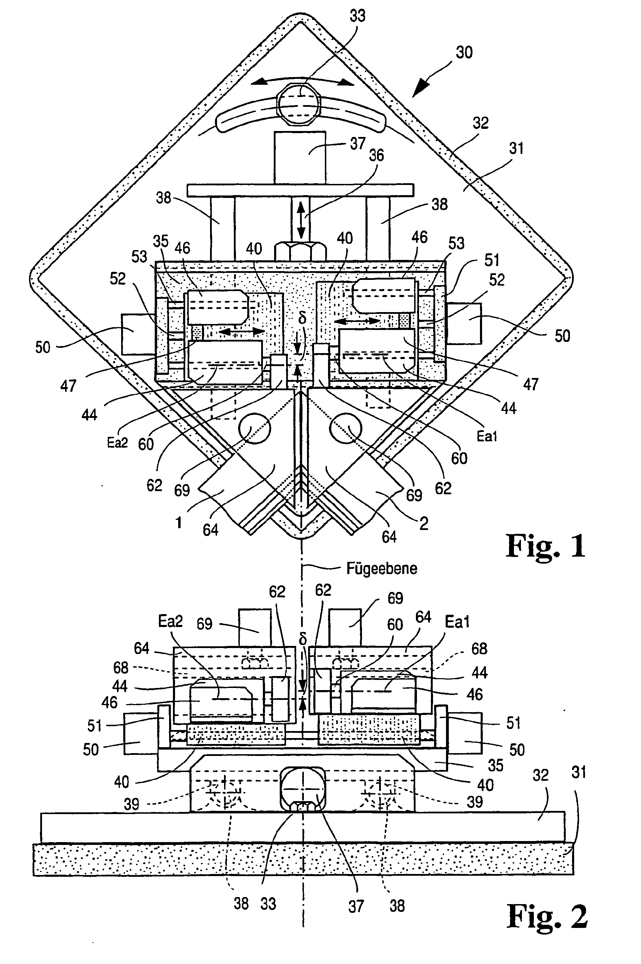

In Fig. 1 ist eine Reibschweißeinheit 30 mit zwei Reibschweißköpfen 44 dargestellt, die zum Reibschweißfügen zweier Profilstäbe 1 und 2 mit einer Gehrung von 45° Verwendung findet. Zu diesem Zweck sind die Reibschweißköpfe 44 jeweils mit einer Klemmeinheit 64 versehen, in welcher das jeweilige Ende des Profilstabes verklemmt wird, um über die mit der Klemmeinheit verbundenen Schwingplatte 62 die Schwingungsenergie in die Profilstabenden einzuleiten. Dazu werden die Reibschweißköpfe 44 derart angesteuert, daß die gegenüberliegenden freien Enden der Profilstäbe im wesentlichen gegenphasig schwingen, d. h. daß die Schubvektoren zu jedem Zeitpunkt gegengerichtet sind.

Als Parameter für den Reibschweißvorgang ergeben sich vier Größen, nämlich die Frequenz und die Amplitude der Schwingung sowie der Druck bzw. Zustellgeschwindigkeit und die Zeit, während welcher die beiden Fügeflächen gegeneinander gedrückt werden.

Bezüglich der Frequenz ist für die in die Profilstäbe einzuleitenden Zirkularschwingen vorgesehen, daß diese je nach dem für die Profilstäbe verwendeten Material zwischen 20 Hz und 500 Hz liegt, wobei die Schwingung eine maximale Amplitude von vorzugsweise weniger als 3 mm hat. Für das Verfestigen der Verschweißung, d.h. wenn z.B. bei Kunststoff die Bearbeitungstemperatur für spanende Bearbeitung erreicht ist, wird von einer Zeitdauer von weniger als 30 Sekunden ausgegangen. Innerhalb dieser Werte sind erhebliche Unterschiede je nach dem für die Profilstäbe 1 und 2 verwendeten Material gegeben. Bei der Verwendung thermoplastischer Kunststoffe (PVC) mit einem E-Modul von ca. 2800 Nm bei Raumtemperatur wird erwartet, daß bei einer Schwingungsfrequenz etwa 120 Hz und einer Amplitude etwa 0,6 mm der Schweißvorgang bereits nach wenigen Sekunden abgeschlossen werden kann. Diese Bedingungen wirken sich auch sehr günstig für die Lärmvermeidung aus.

Die mit einer gegenüber einer Basisplatte 31 drehbar auf der Drehscheibe 32 aufgebaute Reibschweißeinheit 30 kann mit Hilfe einer Fixierschraube 33 in Schwenkpositionen festgehalten werden. Auf der Drehscheibe 32 ist eine Montageplatte 35 befestigt, die bezüglich der Fig. 2 in Nord-Süd-Richtung mit Hilfe eines Achszylinders 37 und einer zugeordneten Schubwelle 36, welche an der Montageplatte angreift, entlang der Führungsschäfte 38 in Kugelbuchsenführungen 39 (Fig. 2) vor- und zurückschiebbar ist.

Auch auf der Montageplatte 35 sind seinerseits Schieber 40 in Profilschienenführungen mit Bezug auf Fig. 1 in Ost-West-Richtung verschiebbar. Diese Verschiebung erfolgt mit Hilfe von Achszylindem 50, welche an Montagewänden 51 auf beiden Seiten der Montageplatte 35 befestigt sind. Die zur Führung an der Montagewand 51 befestigten Führungsschäfte 53 dienen dem Zweck, eine kippfreie Verschiebung der Schieber 40 zu gewährleisten. Es sind jedoch auch beliebig andere Schiebevorrichtungen als geeignet anzusehen.

Die für die Reibverschweißung benötigte Schwingungsenergie wird von den Reibschweißköpfen 44 über einer Exzenterwelle 60 und einer Schwingplatte 62 auf die Klemmeinheiten 64 übertragen. Diese Klemmeinheiten haben in der Draufsicht die Form eines rechtwinkligen Dreiecks und sind in Seitenansicht mit einem nicht dargestellten U-förmigen Aufnahmebereich versehen, dessen Basis senkrecht zur Fügeebene verläuft. Die in der Draufsicht dreieckigen oberen und unteren Schenkel des U-förmigen Aufnahmebereichs greifen über die gesamte Breite der zu verarbeitenden Profilstäbe und werden mit Hilfe einer Klemmplatte 68 festgehalten. Diese Klemmplatte 68 wird mit Profilspannzylinder 69 gegen den eingelegten Profilstab senkrecht verspannbar. Die auf dem jeweiligen Schieber 40 angeordneten Reibschweißköpfe 44 sind abweichend von dem in der EP 707 919 beschriebenen Schwingungsgenerator nur mit einfachen Exzenterwelle 60 ausgerüstet und mit Hilfe einer elektronischen Steuerung leicht zu synchronisieren, und zwar insbesondere auf die Anlauf und die Stopposition, wie noch erläutert wird. Dadurch wird sichergestellt, daß der Reibschweißvorgang mit dem gewünschten Phasenabstand anläuft, und dieser Phasenabstand kontinuierlich beibehalten wird, d. h. die Phasenablage zwischen den einzelnen Reibschweißköpfen 44 sicher eingehalten wird.

Wie aus den Fig. 1 und 2 hervorgeht, sind die Reibschweißköpfe 44 derart auf dem Schieber 40 montiert, daß ein Achsversatz δ zwischen den beiden einander gegenüberliegenden Exzenterwellen Ea1 und Ea2 einstellbar ist. In der Darstellung gemäß Fig. 1 ist ein horizontaler Achsversatz δ und in der Darstellung gemäß Fig. 2 ein vertikaler Achsversatz δ vorgesehen. Es ist selbstverständlich auch ein Achsversatz in beliebiger Winkellage möglich. Die Verwendung eines vertikalen oder horizontalen Achsversatzes für zwei verschiedene Ausführungsformen ist gleichwirkend und wird je nach Art der Ausgestaltung der zu verschweißenden Formteile ausgewählt. Zum Achsversatz kann eine entsprechende starre Montage zumindest eines Reibschweißkopfes auf dem Schieber 40 vorgesehen sein. Es ist jedoch auch eine gesteuerte Verschiebbarkeit der Reibschweißkopfe auf beiden Schiebern 40 vorgesehen.

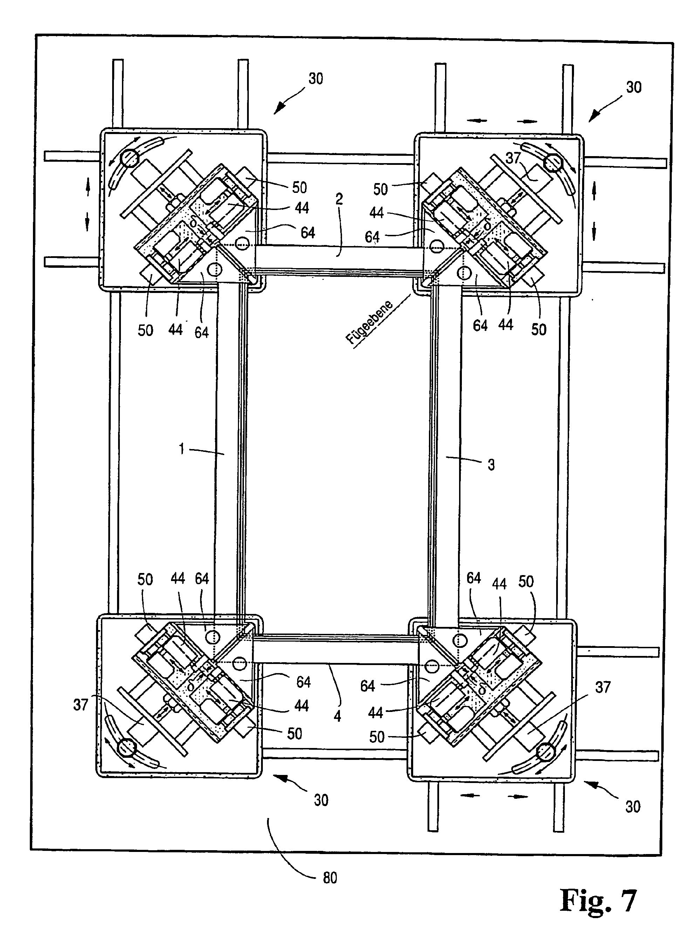

Die vorausstehend beschriebenen Reibschweißeinheiten 30 können auch, wie in Fig. 7 dargestellt, in der bekannten Reibschweißvorrichtung zum Verschweißen eines rechtwinkligen Viereckprofilrahmens Verwendung finden, um die vier Ecken eines Viereckprofilrahmens mit den Stäben 1, 2, 3 und 4 zeitgleich zu verschweißen. Mit der dargestellten Reibschweißvorrichtung können auch Viereckprofilrahmen mit von 90° abweichenden Eckverbindungen verschweißt werden. Dabei sind während des Reibschweißvorgangs die Amplitude, Achsversatz und die Phasenlage der Reibschweißköpfe an den jeweils vier Rahmenecken paarweise so aufeinander abzustimmen, daß sich die von allen Reibschweißköpfen eingeleiteten Kräfte und Drehmomente während des Schweißvorgangs kompensieren.

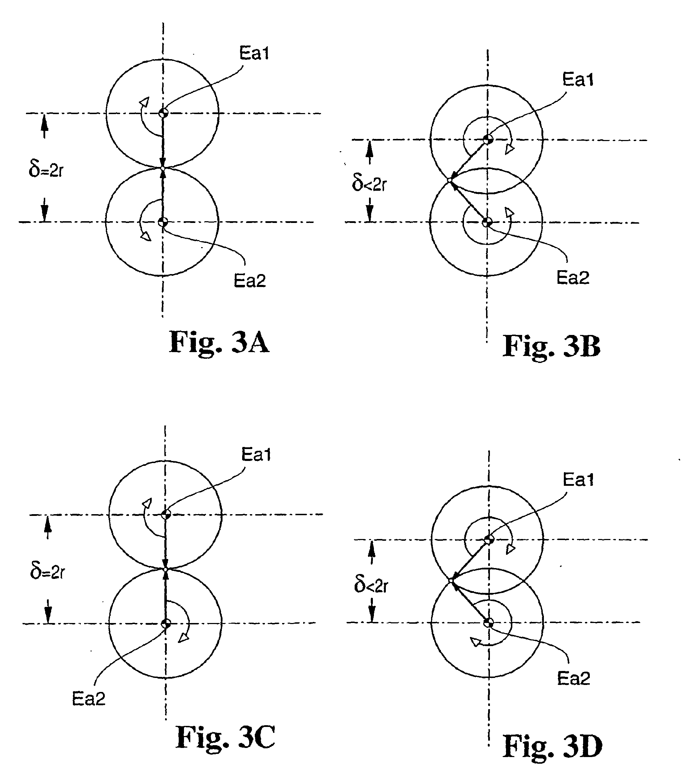

In den Fig. 3A bis 3D sind ist in schematischer Darstellung der Achsversatz δ bezüglich der Achsen Ea1 und Ea2 der Exzenterwellen der Reibschweißköpfe 44 für eine Orbitalschwingung mit kreisförmigen Bahnkurven für gegenläufige und gleichlaufende Phasenvektoren dargestellt.

Grundsätzlich ist für eine optimale Reibung zwischen den Fügeebenen von einem Phasenversatz von 180° bezogen aufeinander gegenüberliegende Bahnpunkte auszugehen. Bei diesem Phasenversatz findet ein maximaler Energieeintrag statt. Es ist natürlich auch ein Phasenversatz <180° vorgesehen, wenn ein reduzierter Energieeintrag wünschenswert ist.

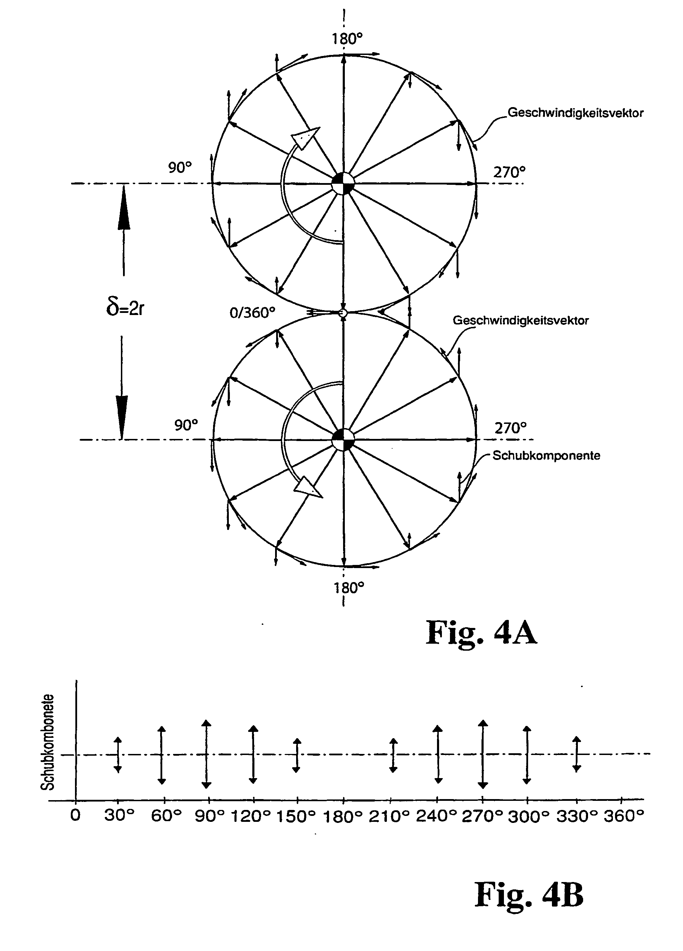

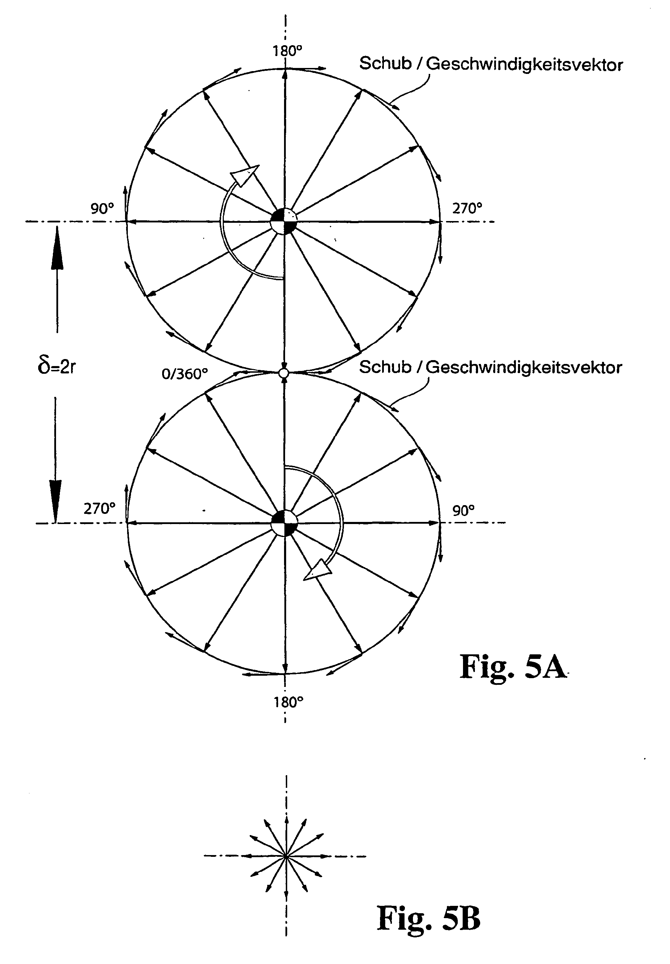

Die Durchführung eines Reibschweißvorgangs wird anhand der Fig. 4A und 4B für eine gleichphasig umlaufende Reibschwingung, d.h. einen linear wirksamen Schub-/Geschwindigkeitsvektor, und anhand der Fig. 5A und 5B für eine gegenphasig umlaufende Reibschwingung, d.h. einen orbital wirksamen Schub-/Geschwindigkeitsvektor, beschrieben, wobei die Phasendifferenz 180° beträgt. In der Darstellung sind die umlaufenden Reibschwingungen d.h. die kinematischen Verhältnisse in der Fügeebene in einer axialen Ansicht von einer Seite aus gesehen.

Für den Reibschweißvorgang werden zunächst die Reibschweißköpfe 44 in Nullposition gebracht, in der die Phasenvektoren auf den beiden einander zugeordneten Bahnkurven auf die mit A bezeichnete Anfangslage der Exzenterwellen weisen. In dieser Stellung werden die Formteile 1 und 2 in die Klemmeinheiten 64 eingespannt, wobei sich die Fügeflächen möglichst paßgenau gegenüberstehen.

Aus dieser Nullposition heraus werden die achsversetzten Exzenterwellen derart in Drehung gesetzt, daß sich die Phasenvektoren für die Fig. 4A und 4B gegenphasig aus der Nullposition heraus bewegen. In den Figuren sind die Positionen der Phasenvektoren jeweils nach einer Drehung von etwa 30° dargestellt. Entsprechendes gilt für die Fig. 5A und 5B. In jeder Position ist Geschwindigkeitsvektor aufgetragen. Eine Überlagerung der Geschwindigkeitsvektoren der Reibschwingung der beiden gegeneinander weisenden Reibschweißköpfe führt zu einer Schubkomponente, welche sich in linearer Parallellage amplitudenmäßig verändern und zu einer linearen Reibbewegung führen, welche bei 0° und 180° zu Null wird. Entsprechendes gilt für gegenphasige Reibschwingungen, bei denen sich in jeder Position der Phasenvektoren gegengerichtete Geschwindigkeitsvektoren und sich damit orbital umlaufende Schubvektoren d.h. orbital umlaufende Reibbewegungen ergeben.

Aufgrund des Achsversatzes δ von genau einer doppelten Schwingungsamplitude berühren sich die Bahnkurven einmal bei jeder 360°-Drehung der Exzenterwellen und bewegen sich danach wieder voneinander weg. Daraus ergibt sich, daß sich die in der Nullposition paßgenau in Deckung befindlichen Fügeflächen an den Randpositionen nicht während des gesamten Reibschweißvorgangs überreiben.

In der Praxis zeigt sich, daß die Reibschweißverbindung bei einem zeitweisen Fehlen der Überdeckung in Randzonen darunter nicht leidet, da bei den üblichen geringen Schweißamplituden von weniger als 1 mm in die Randzone noch genügend Energie eingetragen wird, so daß auch diese sich bis zur Plastifizierungsphase erwärmt. Das durch die Erwärmung unter dem Fügedruck austretende Schweißgut gewährleistet aufgrund der Wulstbildung eine gute bruchfeste Verschweißung der gesamten Fügefläche.

Die fehlerfreie bruchfeste Verschweißung wird auch dadurch gewährleistet, daß die Exzenterwellen in der Abschaltphase ohne Änderung der Phasenlage synchronisiert abgebremst und in der Nullposition der Reibschweißköpfe, d. h. in der Anfangslage A zum Stillstand gebracht werden. Bei diesem Abbremsen wird die Phasenlage unverändert beibehalten.

Durch die Tatsache, daß die für das Reibschweißen notwendige starke Antriebsleistung auch für das Abbremsen zur Verfügung stehen, ist eine sichere Rückstellung auf Null, d.h. auf die mit der Anfangslage identisch Endlage sichergestellt.

Das kontinuierliche Drehen während der Schweißphase und das Abstoppen in einer bestimmten Stellung der Exzenterwellen, und zwar in diese gemeinsame Endlage E der Bahnkurven erfolgt mit Hilfe elektronischer Regelung, um am Ende des Bremsvorgangs, d. h. quasi während der letzten Umdrehung, wenn die Bewegung praktisch fast auf Null heruntergebremst ist, den Stillstand genau in der Anfangslage A zu gewährleisten. Zu diesem Zweck wird während der Schweiß- und Bremsphase ständig die Phasenlage abgegriffen, und die Abbremsung zumindest während der letzten Umdrehung bis zum Stillstand geregelt.

Dabei ergibt sich auch noch der Vorteil, daß mit Verringerung der Drehfrequenz aufgrund der starken Antriebsmotore ein höheres Moment gefahren werden kann, um die beim Abschalten in der Naht entstehenden höheren Schubmomente zu kompensieren. Da die antriebsstarken Antriebsmotore gleichzeitig als Bremsmotore Verwendung finden, steht für die Bremsphase - wie bereits erwähnt - eine entsprechend große Bremskraft zur Verfügung.

Durch diese geregelte Abbremsung bis zum Stillstand treten keine Materialienhomogenitäten in der Schmelzzone auf, welche bei einer schlagartigen Unterbrechung der eingeleiteten Schwingungsgenergie wie bei dem erwähnten und bekannten Schwingungsgenerator infolge der nicht sicheren Rückstellung auf die Nullposition und dem Rückprellen der Mitnehmerspindel unvermeidbar ist.

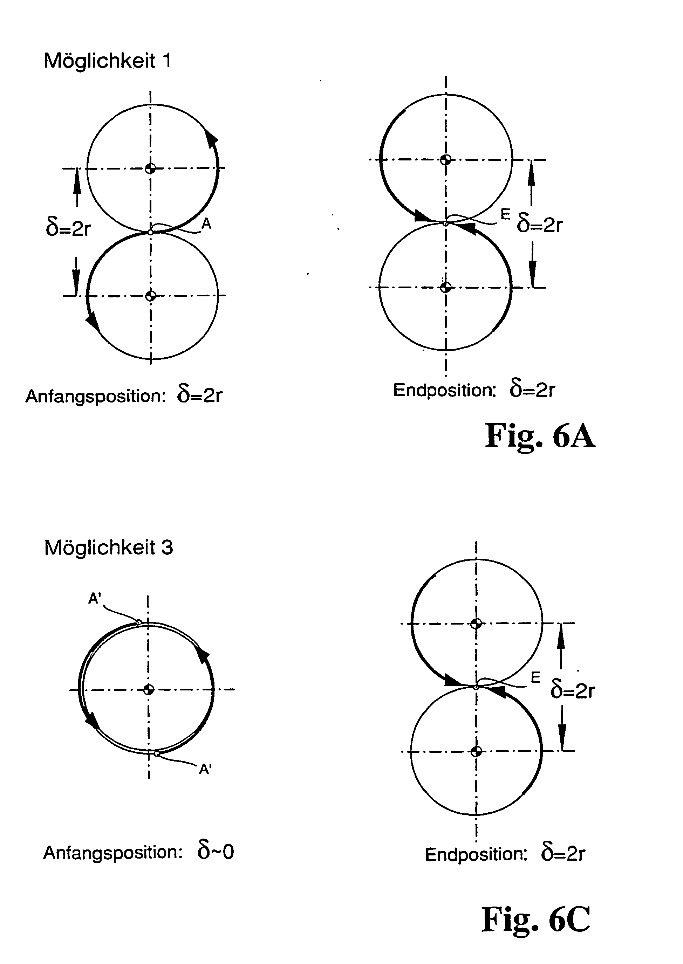

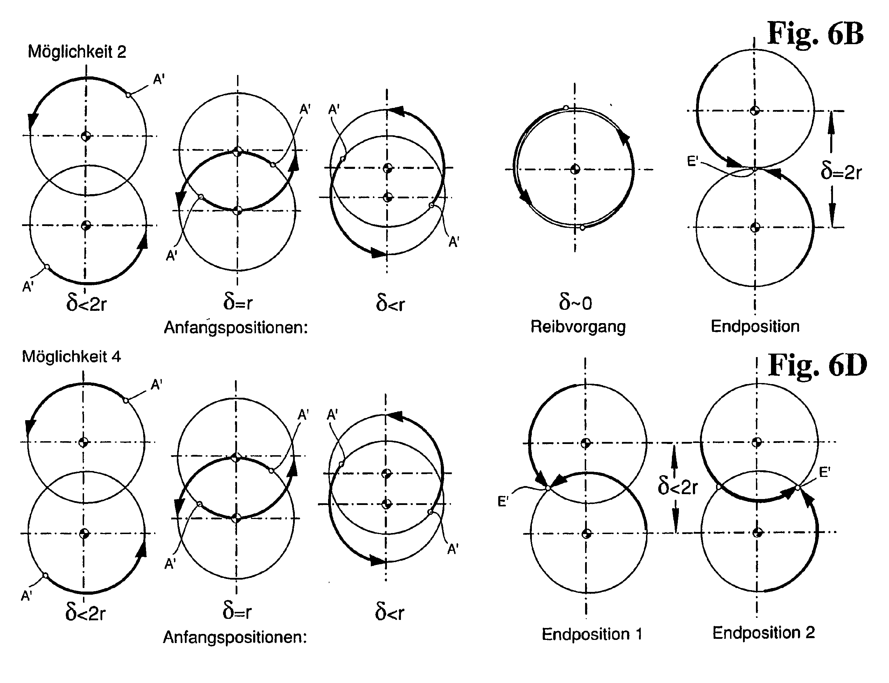

In Fig. 6 ist eine weitere Ausgestalltung der Erfindung diagrammatisch dargestellt. Bei dieser Ausführungsform wird der Achsversatz δ während des Reibschweißvorgangs nicht konstant gehalten, sondern nach dem Anfang des Reibschweißvorgangs aus einem Achsversatz δ = 2r, wobei r gleich der Schwingungsamplitude ist, variiert bzw. auf einen Achsversatz von vorzugsweise δ<r verändert. Dadurch wird sichergestellt, daß die fehlende Überdeckung der Randzonen auf eine sehr kurze Zeitspanne während des gesamten Reibschweißvorgangs minimiert wird.

Wie aus der Darstellung gemäß Fig. 6 hervorgeht, ergibt sich durch die Veränderung des Achsversatzes während des Reibschweißvorgangs eine mehr oder weniger große Überdeckung der Reibflächen. Um allerdings den Reibschweißvorgang auf Null abzubremsen, muß die Abbremsung bei einem Achsversatz δ = 2r am Ende des Reibschweißvorgangs auf die Endposition E oder bei einem Achsversatz δ < 2r auf die Endposition E' erfolgen, in welchem sich die Bahnkurven jeweils schneiden.

Bei dieser geregelten Verstellung des Achsversatzes wird der Phasenversatz der zusammenwirkenden Reibschwingungen beibehalten.

Durch diese Verstellbarkeit des Achsversatzes ergeben sich prinzipiell vier wesentliche Möglichkeiten des Reibschweißvorgangs:
1) Bei δ = 2r und einem konstanten Achsveratz sowie konstanten Phasenversatz von 180° stimmt die Anfangslage A mit der Endlage E überein (Fig. 6A, Möglichkeit 1);
2) Bei einem variablen Achsversatz, d.h. δ sowie Anfangsposition A' und Endposition E' sind variabel, wird der Achsversatz nach Beginn des Reibschweißvorgangs auf δ ~ 0 bei einem ebenfalls konstantem Phasenversatz von 180° und vor dem Ende des Reibschweißvorgangs auf δ = 2r gestellt. Der Reibschweißvorgang wird dann auf die Endposition E' abgebremst (Fig. 6B, Möglichkeit 2);
3) Der Reibschweißvorgang beginnt mit einem Achsversatz δ ~ 0 und einem konstanten Phasenversatz von 180° in den Anfangspositionen A'. Vor dem Ende des Reibschweißvorgangs wird der Achsversatz auf δ = 2r gestellt und der Vorgang in die Endposition E abgebremst (Fig. 6C, Möglichkeit 3);
4) Der Reibschweißvorgang beginnt mit einem variablen Achsversatz δ in beliebigen Anfangspositionen A' der Phasenvektoren jedoch mit einem konstanten Phasenversatz von z.B. 180°. Zum Ende des Reibschweißvorgangs d.h. bis zum abgebremsten Stillstand eines Phasenvektors in einem der die Endposition E' darstellenden Schnittpunkte der beiden Bahnkurven wird der konstante Phasenversatz beibehalten. Danach wird der zweite Phasenvektor bis in dieselbe Endposition zum Stillstand abgebremst nachgeführt. Wegen der zwei Schnittpunkte der Bahnkurven ergeben sich auch zwei mögliche Endpositionen 1 bzw. 2 (Fig. 6D, Möglichkeit 4).

Für die während der Schweißphase notwendigen zusammenführenden Relativbewegungen der Fügeflächen findet vorteilhafterweise eine Weg-Zeitsteuerung Verwendung, welche die Auslegung der elektronischen Steuerung in Verbindung mit der Phasenregelung während des Schweiß- und Abbremsvorgangs wesentlich vereinfacht. Die Erfindung bietet daher nicht nur den Vorteil des einfacheren Aufbaus der Schwingungsgeneratoren aufgrund des Achsversatzes δ, sondern auch einer einfachen Auslegung der Regel- und Steuervorrichtung während der Schweiß- und Abbremsphasen

## Patentansprüche

1. Mehrkopf-Reibschweißverfahren zum Verschweißen der Fügeflächen von Formteilen, wobei die einzelnen Formteile beiderseits benachbart zu den Fügeflächen in Reibschweißköpfen paßgenau aufeinander ausgerichtet festgespannt und die Fügeflächen gegeneinander gedrückt werden, sowie jeweils die freien Enden det Formteile beiderseits der Fügeflächen mit Hilfe von in den ReibschweiBköpfen sich drehenden Exzenterwellen in Schwingung versetzt werden, und wobei beide Reibschweißvektoren der freien Enden der Formteile bzw. Reibschweißköpfe in X-, Z- und Y-, Z-Richtung im wesentlichen gleich- oder gegenphasig schwingen,
**dadurch gekennzeichnet,**
- **daß** der Reibschweißvorgang mit einem konstanten Phasenversatz von ≤ 180° verläuft;
- **daß** die Achsenposition (Ea1, Ea2) der Exzenterwellen (60) der Reibschweißköpfe (44) zu Beginn des Reibschweißvorgangs in eine vorgegebene Anfangsposition zwischen einer Achsüberdeckung (δ = 0) bis zu einem Abstand von der Größe zweier Schwingungsamplituden (δ = 2r) eingestellt wird;
- **daß** der Reibschweißvorgang mit einem Achsversatz zwischen δ = 0 bis δ = 2r beginnt und mit einem Achsversatz von δ ≤ 2r beendet wird, wobei die Exzenterwellen zum Ende der Reibschweißphases derart gesteuert abgebremst werden, daß die umlaufenden Phasenvektoren der Schwingungen der beiden Reibschweißköpfe in einer gemeinsamen Endposition zum Stillstand kommen.

2. Mehrkopf-Reibschweißverfahren nach Anspruch 1,
**dadurch gekennzeichnet,**
- **daß** der Achsversatz während des gesamten Reibschweißvorgangs auf δ=2r eingestellt wird, sodaß die Reibschweißvektoren von der gemeinsamen Anfangsposition (A) ausgehen und sich am Ende des Reibschweißvorgangs wieder in derselben Position (Endposition E) treffen.

3. Mehrkopf-Reibschweißverfahren nach Anspruch 1,
**dadurch gekennzeichnet,**
- **daß** der Achsversatz δ für des gesamten Reibschweißvorgangs bei konstantem Phasenversatz variabel verändert wird, wobei der Achsversatz nach Beginn des Reibschweißvorgangs für die aktive Reibperiode auf δ~ 0 gestellt und am Ende des Reibschweißvorgangs zurück in den Achsversatz versatz δ = 2r gesteuert wird.

4. Mehrkopf-Reibschweißverfahren nach Anspruch 1,
**dadurch gekennzeichnet,**
- **daß** daß der Reibschweißvorgang mit einem Achsversatz von δ ~ 0 und einem konstanten Phasenversatz beginnt und erst vor dem Ende des Reibschweißvorgangs auf einen Achsversatz von δ = 2r gestellt wird.

5. Mehrkopf-Reibschweißverfahren nach Anspruch 1,
**dadurch gekennzeichnet,**
- **daß** der Reibschweißvorgang mit einem Achsversatz zwischen δ = 2r und δ ~ 0 beginnt und dieser Achsversatz während dem ganzen Reibschweißvorgang beibehalten wird,
- **daß** der konstante Phasenversatz bis zum Ende des Reibschweißvorgangs bzw. bis zum abgebremsten Stillstand eines Phasenvektors in einen die Endposition E' darstellenden Schnittpunkt der beiden Bahnkurven beibehalten wird, und
- daßder zweite Phasenvektor zum Stillstand bis in dieselbe Endposition abgebremst nachgeführt wird.

6. Mehrkopf-Reibschweißverfahren nach einem oder mehreren der Ansprüche 1 bis 5,
**dadurch gekennzeichnet,**
- **daß** die Schwingungsamplitude auf eine Größe zwischen 0,1 mm und der Fügeflächenbreite bzw. Fügeflächenlänge, vorzugsweise auf etwa 3 mm, eingestellt werden.

7. Mehrkopf-Reibschweißverfahren nach einem oder mehreren der Ansprüche 1 bis 6,
**dadurch gekennzeichnet,**
- **daß** es zum Verschweißen von Tür- und Fensterprofilrahmen aus Kunststoff- oder Metallprofilen Verwendung findet.

8. Mehrkopf-Reibschweißverfahret nach einem oder mehreren der Ansprüche 1 bis 7,
**dadurch gekennzeichnet,**
- **daß** die Schwingungsfrequenz der Reibschweißköpfe auf einen Wert zwischen 15 Hz und 500 Hz bei einer Amplitude von <5 mm eingestellt wird, und daß die Formteile für weniger als 40 Sekunden mit der Schwingungsfrequenz aneinander gerieben werden.

9. Mehrkopf-Reibschweißvorrichtung mit mehreren, vorzugsweise vier auf einem Maschinenbett (80) zustellbar angeordneten Reibschweißeinrichtungen (30) zum Verschweißen der Fügeflächen offener oder geschlossener Formteilrahmen zur Durchführung des Verfahrens nach einem oder mehreren der Ansprüche 1 bis 4, wobei jede Reibschweißeinheit (30) aus zwei Reibschweißköpfen (44) besteht, deren Schwingplatten (62) jeweils mit einer Klemmeinheit (64) fest verbunden sind, in welcher jeweils ein freies Ende eines Formteils verspannbar ist, wobei ferner die zwei einer Fügeebene zugeordneten Reibschweißköpfe (44) mit ihren Klemmeinheiten (64) auf einer Montageplatte (35) derart gegeneinander verfahrbar montiert sind, daß sie gegen die Fügeebene zustellbar sind,
**dadurch gekennzeichnet,**
- **daß** die Reibschweißköpfe derart achsversetzt positionierbar sind, daß die Achsen der Exzenterwellen (Ea1, Ea2) in eine Achsüberdeckung (δ = 0) bis zweimal der Schwingungsamplitude (δ = 2r) gegeneinander verstellbar sind und sich die Bahnkurven der Phasenvektoren zumindest in der Endposition beim Stillstand in einer gemeinsamen Position auf ihren Bahnkurven treffen.

10. Mehrkopf-Reibschweißvorrichtung nach Anspruch 9,
**dadurch gekennzeichnet,**
- **daß** der Achsabstand (δ) zwischen 0,1 mm und der Fügeflächenbreite bzw. Fügeflächenlänge, vorzugsweise jedoch auf etwa 3 mm, einstellbar ist

11. Mehrkopf-Reibschweißvorrichtung nach einem der Ansprüche 9 oder 10,
**dadurch gekennzeichnet,**
- **daß** die Vorrichtung zur Verschweißung der Fügeflächen offener und geschlossener Formteilrahmen Verwendung findet, wobei jede Fügefläche einer Reibschweißeinheit (30) zugeordnet ist

## Claims

1. A multihead friction welding method for welding the joining surfaces of shaped parts, whereby the individual shaped parts are clamped on both sides of and proximal to the said joining surfaces as well as in exact alignment with one another in friction welding heads, and whereby the joining surfaces are pressed together and the free ends of the said shaped parts on both sides of the joining surfaces, respectively, are set into vibration by means of eccentric shafts, which rotate within the friction welding heads, and whereby both friction welding vectors of the free ends of the shaped parts and the said friction welding heads, respectively, vibrate, essentially in equal phase or in counterphase, in both the X-Z and the Y-Z direction,
**characterized in that**
- the friction welding process runs with a constant phase shift of ≤180°,
- the axis position (Ea1 Ea2) of the eccentric shafts (60) of the friction welding heads (44) at the beginning of the friction welding process is adjusted to a predetermined start position between an axis coincidence (δ=0) up to a separating distance having a value of two vibration amplitudes (δ=2r), and
- the friction welding process starts with an axis offset between δ=0 and δ=2r and ends with an axis offset of δ≤2r, whereby the eccentric shafts, at the end of the friction welding phase, are controllingly decelerated in such a manner that the circulating phase vectors of the vibrations of the two friction welding heads come to a standstill in a common end position.

2. A multihead friction welding method in accord with claim 1,
**characterized in that**
- the said axis offset during the entire friction welding process is adjusted to δ=2r, so that the friction welding vectors start out from the common start position (A) and, at the end of the friction welding process, coincide again in the same position (end position E).

3. A multihead friction welding method in accord with claim 1,
**characterized in that**
- the axis offset δ, for the entire friction welding process, is variably altered at a constant phase shift, whereby the axis offset, after the start of the friction welding process, is set to δ~0 for the active friction period and, at the end of the friction welding process, is adjusted by control back to the axis offset δ=2r.

4. A multihead friction welding method in accord with claim 1,
**characterized in that**
- the friction welding process starts with an axis offset of δ~0 and a constant phase shift and, only prior to the end of the friction welding process, is adjusted to an axis offset of δ=2r.

5. A multihead friction welding method in accord with claim 1,
**characterized in that**
- the friction welding process starts with an axis offset between δ=2r and δ~0 and this axis offset, during the entire friction welding process, is retained unchanged,
- the constant phase shift is retained up to the end of the friction welding process, that is, up to the decelerated standstill of one phase vector in an intersection of the two track curves, which designates the end position E', and
- the second phase vector is subsequently followed-up by being decelerated to a standstill at the same end position.

6. A multihead friction welding method in accord with any of claims 1 to 5,
**characterized in that**
- the vibration amplitude is adjusted to be of a value between 0.1 mm and the width or the length of the joining surface, respectively, preferably to approximately 3 mm.

7. A multihead friction welding method in accord with any of claims 1 to 6,
**characterized in that**
- the said multihead friction welding method is used for the welding of door and window framings of plastic or of metal profile members.

8. A multihead friction welding method in accord with any of claims 1 to 7,
**characterized in that**
- the vibration frequency of the friction welding heads is adjusted to a value between 15 Hz and 500 Hz at an amplitude of <5 mm, and the shaped parts are rubbed together for less than 40 seconds at the vibration frequency.

9. A multihead friction welding device with several, preferably four friction welding units (30), which are placed on an adjustable machine bed (80) for the welding of the joining surfaces of open or closed shaped part framings, for the carrying out of the method in accord with one or more of the claims 1 to 4, whereby each friction welding unit (30) consists of two friction welding heads (44), the vibration plates (62) of which are rigidly attached, respectively, to clamping means (64), in each of which clamping means (64) a free end of a shaped part can be clamped, whereby, further, the two friction welding heads (44) assigned to a joining plane, including their clamping means (64), are mounted on a mounting plate (35) in such a manner that they can be moved against one another so that they can be adjusted with respect to the joining plane,
**characterized in that**
- the friction welding heads can be positioned with axis offsets such that the axes of the eccentric shafts (Ea1, Ea2) can be displaceably adjusted to an axis coincidence (δ=0) up to twice the vibration amplitude (δ=2r) and the track curves of the phase vectors meet in a common position on their track curves, at least in the end position at a standstill.

10. A multihead friction welding device in accord with claim 9,
**characterized in that**
- the axis offset (δ) can be adjusted to be between 0.1 mm and the width or the length of the joining surface, respectively; preferably, however, to approximately 3 mm.

11. A multihead friction welding device in accord with either of claims 9 or 10,
**characterized in that**
- the device is used for the welding of the joining surfaces of open or closed shaped part framings, whereby each joining surface is assigned to a friction welding unit (30).

## Revendications

1. Procédé de soudage par friction à plusieurs têtes pour souder des surfaces de jointure de pièces moulée, où les pièces moulées individuelles sont fixées avoisinant de part et d'autre les surfaces de jointure, alignées de manière ajustée l'une sur l'autre dans des têtes de soudage par friction, et les surfaces de jointure sont pressées l'une contre l'autre, de même que chacune des extrémités libres des pièces moulées de part et d'autre des surfaces de jointure sont faites vibrées à l'aide d'arbres excentriques, se tournant dans les têtes de soudage par friction, et où les deux vecteurs de soudage par friction des extrémités libres des pièces moulées respectivement des têtes de soudage par friction vibrent dans des direction X-,Z- et Y-Z- en substance en phase ou hors phase
**caractérisé en ce**
- **que** le processus de soudage par friction se déroule avec un décalage de phase constant inférieur ou égal à 180°
- **que** la position d'axe (Ea1, Ea2) des bras excentriques (60) des têtes de soudage par friction (44) est fixée au début du processus de soudage par friction dans une position de début donnée entre une coïncidence d'axe (δ=0) jusqu'à une distance de la taille de deux amplitudes de vibration (δ=2r) ;
- **que** le processus de soudage par friction commence avec un décalage d'axe entre δ =0 jusqu'à δ=2r et est terminé avec un décalage d'axe δ ≤ 2r, où les bras excentriques à la fin de la phase de soudage par friction sont ainsi freinés de manière contrôlé, que les vecteurs de phase des vibrations des deux têtes de soudage par friction circulaires sont arrêtés dans une position finale commune.

2. Procédé de soudage par friction à plusieurs têtes selon la revendication 1, **caractérisé en ce**
- **que** le décalage de phase pendant tout le processus de soudage par friction est fixé à δ=2r, de sorte que les vecteurs de soudage de friction partent de la position de début commune
(A) et se retrouvent à la fin du processus de soudage par friction de nouveau dans la même position (position finale E).

3. Procédé de soudage par friction à plusieurs têtes selon la revendication 1, **caractérisé en ce**
- **que** le décalage d'axe δ pour tout le processus de soudage par friction est changé de manière variable à décalage de phase constant, où le décalage d'axe après le début du processus de soudage par friction est fixé à δ ≈0 pour la période soudage active et à la fin du processus de soudage par friction est ramené au décalage d'axe δ=2r.

4. Procédé de soudage par friction à plusieurs têtes selon la revendication 1, **caractérisé en ce**
- **que** le processus de soudage par friction commence avec un décalage d'axe de δ ≈0 et un décalage de phase constant et seulement avant la fin du processus de soudage par friction est fixé à un décalage d'axe de δ=2r.

5. Procédé de soudage par friction à plusieurs têtes selon la revendication 1, **caractérisé en ce**
- **que** le processus de soudage par friction commence avec un décalage d'axe entre δ=2r et δ ≈0 et ce décalage d'axe est maintenu pendant tout le processus de soudage par friction,
- **que** le décalage de phase constant est maintenu jusqu'à la fin du processus de soudage par friction ou jusqu'à l'arrêt freiné d'un vecteur de phase dans un point d'intersection des deux trajectoires courbes représentant la position finale E', et
- **qu'**on fait suivre le deuxième vecteur de phase en étant freiné à l'arrêt jusqu'à la même position.

6. Procédé de soudage par friction selon l'une quelconque des revendications 1 à 5, **caractérisé en ce**
- **que** l'amplitude de vibration est fixée à une taille entre 0,1mm et la largeur de surface de jointure ou la longueur des surfaces de jointure, de préférence à environ 3mm.

7. Procédé de soudage par friction selon l'une quelconque des revendications 1 à 6, **caractérisé en ce**
- **que** cela trouve application pour le soudage de cadre de profil de porte et fenêtre en profilé plastique ou métallique.

8. Procédé de soudage par friction selon l'une quelconque des revendications 1 à 7, **caractérisé en ce**
- **que** la fréquence de vibration des têtes de soudage par friction est fixée à une valeur entre 15 Hz et 500Hz à une amplitude <5mm, et que les pièces moulées sont frottées l'une à l'autre pour moins de 40 secondes à la fréquence de vibration.

9. Dispositif de soudage par friction avec plusieurs appareils de soudage par friction (30), de préférence quatre disposés sur un socle (40) de manière ajustable pour souder les surfaces de jointure de cadre de pièces moulées ouvertes ou fermées pour réalisation du procédé selon une plusieurs des revendications 1 à 4, où chaque unité de soudage par friction (30) est composée de deux têtes de soudage par friction (44), dont les plaques de vibrations (62) sont fixées de manière fixe chaque fois avec une unité de blocage (64), dans laquelle chaque fois une extrémité libre d'une pièce moulée peut être haubanée, où de plus les deux têtes de soudage par friction (44) allouées à un plan de jointure avec leurs unités de blocage (64) sont ainsi montées déplaçables l'une contre l'autre sur une plaque de montage (35), qu'elles sont ajustables relativement au plan de jointure,
**caractérisé en ce**
- **que** les têtes de soudage par friction sont ainsi positionnables de manière décalée d'axe, que les axes des bras excentriques (Ea1, Ea2) sont réglables l'un contre l'autre dans une coïncidence d'axe (δ=0) jusqu'à deux fois l'amplitude de vibration (δ=2r) et que les trajectoires courbes des vecteurs de phase se rencontrent dans une position commune sur leurs trajectoires courbes au moins dans leur position finale à l'arrêt.

10. Procédé de soudage par friction à plusieurs têtes selon la revendication 9, **caractérisé en ce**
- **que** la distance d'axe (δ) est réglable entre 0,1mm et la largeur de surface de jointure ou la longueur de surface de jointure, de préférence cependant à environ 3mm.

11. Procédé de soudage par friction à plusieurs têtes selon la revendication 9 ou 10, **caractérisé en ce**
- **que** le dispositif trouve application pour soudage de surface de jointure de cadre de pièces moulées ouvertes ou fermées, où chaque surface de jointure est allouée à une unité de soudage par friction (30).
